# EUROPÄISCHE PATENTSCHRIFT

(11) **EP 2 867 068 B1**
(45) Veröffentlichungstag und Bekanntmachung des Hinweises auf die Patenterteilung: **05.04.2017**
(21) Anmeldenummer: 13721912.7
(22) Anmeldetag: 08.05.2013
(51) Int. Cl.: B60R 7/04

(54) **SITZBANK FÜR EIN KRAFTFAHRZEUG MIT EINEM FANGSCHUTZELEMENT**
SEAT BENCH FOR VEHICLE WITH A LOAD SECURING PROTECTION DEVICE
BANQUETTE DE VÉHICULE AUTOMOBILE AYANT UN DISPOSITIF POUR LA PROTECTION DES PASSAGERS

(30) Priorität: 27.06.2012 DE 102012012742
(43) Veröffentlichungstag der Anmeldung: 06.05.2015
(73) Patentinhaber: Daimler AG, 70327 Stuttgart (DE)
(72) Erfinder: KERNER, Wolfgang, 72184 Eutingen (DE)
(74) Vertreter: JENSEN & SON
(86) Internationale Anmeldenummer: PCT/EP2013/001373
(87) Internationale Veröffentlichungsnummer: WO 2014/000841

(56) Entgegenhaltungen:
- CN-C- 100 368 232
- DE-A1- 19 934 996
- DE-A1-102005 046 502
- DE-U1- 29 815 389
- FR-A1- 2 865 697
- US-A- 4 368 902
- US-A- 5 529 341
- US-A1- 2007 152 493

## Beschreibung

Die vorliegende Erfindung betrifft eine Sitzbank für ein Kraftfahrzeug mit einem Sitzelement, welches bezüglich einer Sitzrichtung der Sitzbank einen vorderen und einen hinteren Endabschnitt aufweist, mit einer Sitzlehne, welche einen oberen und einen unteren Endabschnitt aufweist und im Bereich ihres unteren Endabschnitts an dem hinteren Endabschnitt des Sitzelements angebunden ist, mit einem bezüglich der Sitzrichtung in einem linken und rechten Randbereich der Sitzbank angeordneten linken und rechten Sicherheitsgurt, mit einem Fangschutzelement mit einem ersten und einem zweiten Endabschnitt, welches mit dem ersten Endabschnitt im Bereich des vorderen Endabschnitts des Sitzelements an diesem oder an einem Fahrzeug-Innenraumboden des Kraftfahrzeugs lösbar befestigbar ist und mit dem zweiten Endabschnitt an dem linken und dem rechten Sicherheitsgurt lösbar befestigbar ist, wobei der linke und rechte Sicherheitsgurt einen linken und rechten Gurtstreifen mit einer entlang desselben verschiebbar angeordneten linken bzw. rechten Gurtlasche aufweist, wobei im Bereich des zweiten Endabschnitts des Fangschutzelements jeweils eine zu der linken und rechten Gurtlasche komplementäre linke bzw. rechte Gurtfalle angeordnet ist, an welcher die linke und rechte Gurtlasche jeweils lösbar befestigbar ist, wobei das Fangschutzelement in einem Betriebszustand, in welchem die linke und rechte Gurtfalle jeweils an der linken bzw. rechten Gurtlasche des linken bzw. rechten Sicherheitsgurts befestigt sind, mit einem vorderen Fangschutz-Abschnitt wenigstens teilweise an einer Vorderseite des Sitzelements anliegt, wobei das Fangschutzelement im Betriebszustand mit einem integral mit dem vorderen Fangschutz-Abschnitt verbundenen hinteren Fangschutz-Abschnitt einen in Sitzrichtung wirkenden Fangschutz, insbesondere für auf dem Sitzelement abgelegtes Ablagegut, ausbildet ist sowie ein Kraftfahrzeug mit einer solchen Sitzbank.

Auf in Kraftfahrzeugen verbauten Sitzbänken werden häufig verschiedene Gegenstände als Ablagegut mitgeführt, wenn die Rückbank nicht durch einen Insassen des Kraftfahrzeugs besetzt ist. Ein solches Ablagegut ist dann üblicherweise auf einem Sitzelement der Sitzbank lose angeordnet, so dass dieses im Falle von bestimmten Fahrzeugbewegungen, beispielsweise einem spontanen Abbremsen, aufgrund seiner Massenträgheit auf unerwünschte Weise gegen weitere Fahrzeugkomponenten des Kraftfahrzeugs bewegt und dabei beschädigt werden kann. Grundsätzlich besteht also bei derart auf der Sitzbank abgelegtem Ablagegut immer die Gefahr von unkontrollierten Bewegungen des Ablageguts in dem Kraftfahrzeug, insbesondere wenn von diesem Beschleunigungsmanöver durchgeführt werden.

Um auf der Sitzbank abgelegtes Ablagegut gegen unerwünschte Bewegungen zu sichern, existieren bereits verschiedenartige Lösungen. Beispielsweise kann eine solche herkömmliche Sitzbank mit einem breiten Gummiband versehen werden, welches bei Bedarf über eine Sitz-Vorderkante geklappt wird, wobei an einer Sitzoberfläche der Sitzbank ein von dem Gummiband zusammengezogener Ablagespalt ausgebildet wird. Mittels eines derartigen Gummibands lassen sich aber nur Gegenstände mit relativ kleinen äußeren Abmessungen gegen unerwünschte Bewegungen sichern.

Gemäß einer weiteren Lösung ist es auch bekannt, ein Sitzkissen der Sitzbank hochklappbar auszugestalten, so dass nach dem Hochklappen des Sitzkissens in einem Sitzgestell der Sitzbank eine Mulde freigegeben wird, in welcher Ablagegut platziert werden kann. Auch mittels eines solchen hochklappbaren Sitzkissens können aber nur Gegenstände mit relativ kleiner geometrischer Abmessung sicher in der Sitzbank platziert werden.

Eine Sitzbank der eingangs genannten Art gemäß dem Oberbegriff des Anspruchs 1 ist aus US 5,529,314 bekannt. Die bekannte Sitzbank ist mit einem Fangschutzelement versehen, welches lösbar sowohl an einem die Sitzfläche definierenden Sitzelement der Sitzbank (oder an einem diesem Sitzelement zugeordneten Innenraumboden des Kraftfahrzeugs) sowie an einem an der Sitzbank angeordneten Sicherheitsgurt befestigbar ist, so dass das Fangschutzelement als Fangschutz für auf dem Sitzelement der Sitzbank abgelegtes Ablagegut wirkt, insbesondere wenn das Kraftfahrzeug Beschleunigungsmanöver durchführt, so dass in Längs- und/oder seitlicher Richtung Beschleunigungskräfte auf das auf der Sitzbank abgelegte Ablagegut wirken. Die Sitzbank weist hierzu ein Sitzelement auf, welches bezüglich einer Sitzrichtung der Sitzbank einen vorderen und einen hinteren Endabschnitt aufweist. Die Sitzbank umfasst ferner eine Sitzlehne, welche wiederum einen oberen und einen unteren Endabschnitt aufweist und welche im Bereich ihres unteren Endabschnitts an dem hinteren Endabschnitt des Sitzelements angebracht ist. Des Weiteren umfasst die erfindungsgemäße Sitzbank einen bezüglich der Sitzrichtung in einem linken und rechten Randbereich der Sitzbank angeordneten linken und rechten Sicherheitsgurt.

Weiter weist die Sitzbank ein Fangschutzelement auf, welches mit einem ersten Endabschnitt im Bereich des vorderen Endabschnitts des Sitzelements an diesem (oder alternativ an einem Fahrzeug-Innenraumboden des Kraftfahrzeugs) lösbar befestigt ist und mit einem zweiten Endabschnitt an dem linken und/oder dem rechten Sicherheitsgurt lösbar befestigbar ist. Mittels einer solchen lösbaren Befestigung wird sichergestellt, dass das Fangschutzelement auf einfache Weise von der Sitzbank entfernt und/oder in einer geeigneten, in der Sitzbank bereitgestellten Ablage verstaut werden kann, wenn kein Ablagegut auf dem Sitzelement der Sitzbank abgelegt ist oder ein Insasse des Kraftfahrzeugs auf dem Sitzelement der Sitzbank sitzen möchte. Dabei ist es ausreichend, die Befestigung an dem linken und/oder rechten Sicherheitsgurt zu lösen, um das Fangschutzelement dann im Bereich des Fahrzeug-Innenraumbodens und des Sitzelements verstauen zu können. Alternativ kann das Fangschutzelement durch zusätzliches Lösen der Befestigung an dem vorderen Endabschnitt des Sitzelements oder an dem Fahrzeuginnenraum-Boden auch vollständig von der Sitzbank entfernt werden.

In einem montierten Zustand (sog. Betriebszustand) wirkt das Fangschutzelement als Fangschutz für auf dem Sitzelement der Sitzbank abgelegte Gegenstände. Somit kann verhindert werden, dass diese Gegenstände bei Beschleunigung des Kraftfahrzeugs unerwünschte Relativbewegungen (relativ zu der Sitzbank) ausführen können und insbesondere in einen Fußablage-Bereich, welcher in Sitzrichtung vor dem Sitzelement angeordnet ist, fallen und dabei beschädigt werden können.

Der linke und der rechte Sicherheitsgurt weisen einen linken und rechten Gurtstreifen mit einer entlang desselben verschiebbar angeordneten linken bzw. rechten Gurtlasche auf. Im Bereich des zweiten Endabschnitts des Fangschutzelements ist dabei jeweils eine zu der linken und rechten Gurtlasche komplementäre linke bzw. rechte Gurtfalle angeordnet, an welcher die linke und rechte Gurtlasche der beiden Gurtstreifen jeweils lösbar befestigt sind. Auf diese Weise lässt sich auf technisch einfache Weise eine lösbare Befestigung des Fangschutzelements an dem Sicherheitsgurt realisieren. Bei dem linken bzw. rechten Sicherheitsgurt kann es sich um herkömmliche Sicherheitsgurte handeln, mit welchen auf der Sitzbank in dem Kraftfahrzeugsitz sitzende Insassen des Kraftfahrzeugs auf herkömmliche Art und Weise gesichert werden können, wenn das Fangschutzelement nicht an der Sitzbank montiert ist.
Zudem ist daran gedacht, dass das Fangschutzelement im Betriebszustand, in welchem die linke und rechte Gurtfalle jeweils an der linken bzw. rechten Gurtlasche des linken bzw. rechten Sicherheitsgurts befestigt sind, mit einem vorderen Fangschutz-Abschnitt wenigstens teilweise an einer Vorderseite des Sitzelements anliegen. In dem Betriebszustand kann das Fangschutzelement mit einem integral mit dem vorderen Fangschutz-Abschnitt verbundenen hinteren Fangschutz-Abschnitt einen in Sitzrichtung wirkenden Fangschutz, insbesondere für auf dem Sitzelement abgelegtes Ablagegut, ausbilden.
Es ist daher eine Aufgabe der vorliegenden Erfindung, eine Sitzbank für ein Kraftfahrzeug bereitzustellen, bei welcher oben genannte Nachteile beseitigt oder zumindest reduziert sind.

Die oben genannte Aufgabe wird gelöst durch den Gegenstand des unabhängigen Anspruchs 1. Bevorzugte Ausführungsformen sind Gegenstand der Unteransprüche.

Um Ablagegut mit verschiedenen geometrischen Abmessungen sicher gegen unerwünschte Bewegungen auf der Sitzbank schützen zu können, bildet der hintere Fangschutz-Abschnitt erfindungsgemäß in dem Fangschutz-Betriebszustand des Fangelements mit einer durch eine Oberseite des Sitzelements definierte Sitzebene einen einstellbaren Fangschutz-Winkel aus. Erfindungsgemäß erfolgt das Einstellen des Fangschutz-Winkels durch Bewegen des linken und/oder rechten Befestigungselements entlang des linken bzw. rechten Gurtstreifens. Für den Fall, dass nur wenige Gegenstände oder Gegenstände mit kleinen räumlichen Abmessungen auf dem Sitzelement der Sitzbank abgelegt sind, bietet es sich an, den Fangschutz-Winkel klein, vorzugsweise auf einen Wert von maximal 30°, einzustellen, so dass der hintere Fangschutz-Abschnitt quasi als Abdeckung für die auf dem Sitzelement abgelegten Gegenstände wirken. Auf diese Weise kann eine verbesserte Fangschutz-Wirkung erzielt werden.

Um sicherzustellen, dass ein bereits eingestellter, vorbestimmter Fangschutz-Winkel sich nicht auf unerwünschte Weise, beispielsweise durch eine selbsttätige Bewegung der Gurtlaschen entlang der Gurtstreifen, ändert, ist erfindungsgemäß zudem vorgesehen, dass der linke und/oder rechte Sicherheitsgurt ein entlang des linken bzw. rechten Gurtstreifens verschiebbares Fixierungselement aufweist, mittels welchem das linke bzw. rechte Befestigungselement zum Fixieren des Fangschutzelements in einem bestimmten Fangschutz-Winkel in einer beliebigen Position entlang des linken bzw. rechten Gurtstreifens fixierbar ist.

In einer besonders kostengünstig herzustellenden Ausführungsform kann das Fangschutzelement in der Art einer Fangschutz-Plane oder in der Art eines Fangschutz-Netzes ausgebildet sein. Auf diese Weise lässt sich das Fangschutzelement einfach und platzsparend verstauen, wenn es nicht als Fangschutz wirken soll, beispielsweise, weil auf dem Sitzelement der Sitzbank ein oder mehrere Insassen des Kraftfahrzeugs sitzen. Mittels eines derartig ausgebildeten Fangschutzelements können für den Fall, dass das die Sitzbank verwendende Kraftfahrzeug Beschleunigungsmanöver durchführt, die von dem Ablagegut erzeugten Trägheits-Bewegungen "sanft" abgefangen werden, so dass eine Beschädigung des Ablageguts bei Beschleunigungsmanövern des Kraftfahrzeugs weitgehend ausgeschlossen werden kann.

Die Erfindung betrifft des Weiteren ein Kraftfahrzeug mit einem Fahrzeug-Innenraumboden sowie mit einer auf dem Fahrzeug-Innenraumboden angeordneten erfindungsgemäßen Sitzbank.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine erfindungsgemäße Sitzbank in einer Ansicht,
- Fig. 2: die Sitzbank der Fig. 1 in einer Vorderansicht,
- Fig. 3: eine grobschematische Seitenansicht der Sitzbank gemäß der Fig. 1,
- Fig. 4: eine Teilansicht der Figur 1, welche eine Befestigung des Fangschutzelements an einer Gurtfalle zeigt,
- Fig. 5: die Sitzbank der Fig. 1 in einem Verstau-Zustand,
- Fig. 6: eine Teilansicht der Figur 5,
- Fig. 7: eine Variante der Sitzbank der Figur 1 in einer Ansicht.

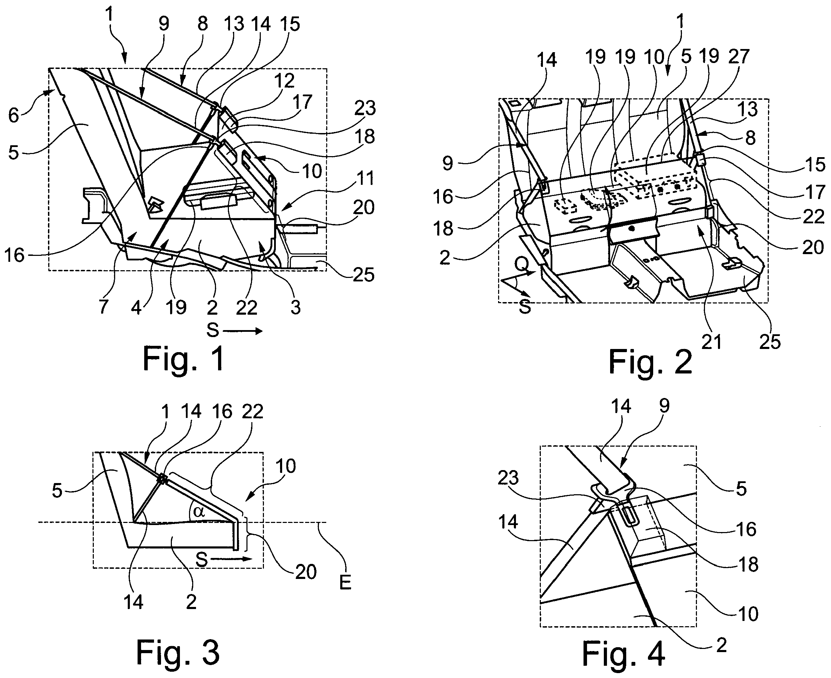

In der Figur 1 ist eine erfindungsgemäße Sitzbank in einer perspektivischen Ansicht in einem Betriebszustand dargestellt und mit 1 bezeichnet. Die Sitzbank 1 umfasst ein Sitzelement 2, welches bezüglich einer Sitzrichtung S der Sitzbank 1 einen vorderen und einen hinteren Endabschnitt 3, 4 aufweist. Die Sitzbank 1 umfasst ferner eine Sitzlehne 5, welche einen oberen und einen unteren Endabschnitt 6, 7 aufweist, wobei die Sitzlehne 5 im Bereich ihres unteren Endabschnitts 7 an dem hinteren Endabschnitt 4 des Sitzelements 2 angelenkt ist.

Die Darstellung der Figur 2 zeigt die Sitzbank 1 der Figur 1 in einer Frontansicht. Die Sitzbank 1 umfasst jeweils einen bezüglich der Sitzrichtung S in einem linken bzw. rechten Randbereich der Sitzbank 1 angeordneten linken und rechten Sicherheitsgurt 8, 9. Erfindungsgemäß weist die Sitzbank 1 ein Fangschutzelement 10 mit einem ersten Endabschnitt 11 und einem zweiten Endabschnitt 12 auf, wobei das Fangschutzelement 10 mit seinem ersten Endabschnitt 11 im Bereich des vorderen Endabschnitts 3 des Sitzelements 2 lösbar an diesem befestigt ist. Entsprechend ist das Fangschutzelement 10 mit dem zweiten Endabschnitt 12 lösbar an dem linken und rechten Sicherheitsgurt 8, 9 befestigbar; hierzu können der linke und rechte Sicherheitsgurt 8, 9 einen linken und rechten Gurtstreifen 13, 14 und eine entlang des linken bzw. rechten Gurtstreifens 13, 14 verschiebbar angeordnete linke bzw. rechte Gurtlasche 15, 16 aufweisen.

Im Bereich des zweiten Endabschnitts 12 des Fangschutzelements 10 ist eine zu der linken und rechten Gurtlasche 15, 16 komplementäre linke bzw. rechte Gurtfalle 17, 18 angeordnet. In einem in den Figuren 1 und 2 gezeigten Fangschutz-Betriebszustand, in welchem das Fangschutzelement 10 als Fangschutz für auf dem Sitzelement 2 abgelegtes Ablagegut 19 wirkt, sind die linke und rechte Gurtlasche 15, 16 an der linken bzw. rechten Gurtfalle 17, 18 befestigt. Das Fangschutzelement 10 kann, wie in den Figuren 1 und 2 gezeigt, in der Art einer Fangschutz-Plane, alternativ aber auch in der Art eines Fangschutz-Netzes ausgebildet sein. Das Fangschutzelement 10 liegt in dem in den Figuren 1 und 2 gezeigten Betriebszustand mit einem vorderen Fangschutz-Abschnitt 20 wenigstens teilweise an einer Vorderseite 21 des Sitzelements 2 an. Erfindungsgemäß bildet das Fangschutzelement 10 mit einem integral mit dem vorderen Fangschutz-Abschnitt 20 verbundenen hinteren Fangschutz-Abschnitt 22 einen in Sitzrichtung S wirkenden Fangschutz für das auf dem Sitzelement 2 abgelegte Ablagegut 19 aus.

Betrachtet man die grobschematische Seitenansicht der Figur 3, so erkennt man, dass der hintere Fangschutz-Abschnitt 22 mit einer durch eine Oberseite des Sitzelements 2 definierten Sitzebene E einen einstellbaren Fangschutz-Anstellwinkel α ausbildet. Der Fangschutz-Anstellwinkel α lässt sich dabei durch Bewegen der linken und rechten Gurtlasche 15, 16 entlang des linken bzw. rechten Gurtstreifens 13, 14 einstellen.

Betrachtet nun die Darstellung der Figur 4, welche eine Teilansicht der Figur 2 ist, so erkennt man, dass der in dieser Darstellung gezeigte rechte Sicherheitsgurt 9 ein entlang des rechten Gurtstreifens 14 verschiebbares Fixierungselement 23 aufweist, mittels welchem die rechte Gurtlasche 16 zum Fixieren des Fangschutzelements 10 in einem bestimmten Fangschutz-Anstellwinkel α in einer beliebigen Position entlang des rechten Gurtstreifens 14 fixierbar ist. Hierzu wird das Fixierungselement 23 einfach auf die rechte Gurtlasche 16 aufgeschoben.

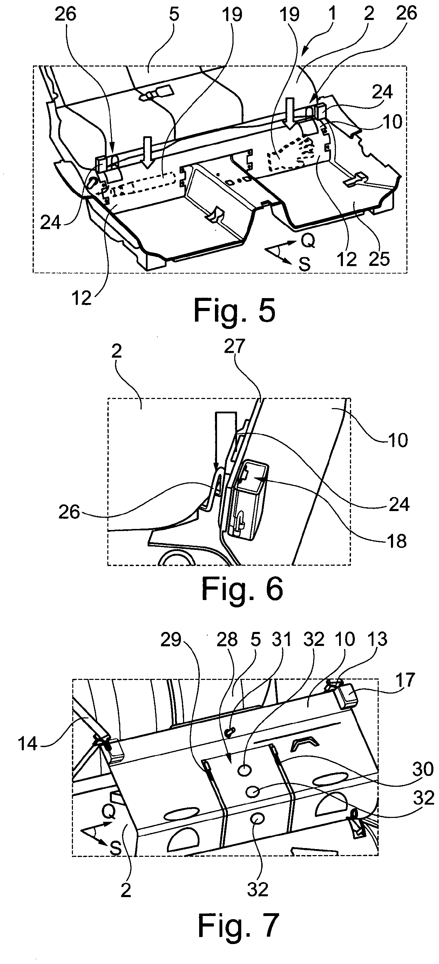

In der Figur 5 ist die Sitzbank 1 mit dem Fangschutzelement 10 gezeigt, wobei sich dieses nicht wie in den Figuren 1 bis 4 gezeigt in dem Betriebszustand befindet, sondern in einem von dem Betriebszustand verschiedenen sog. Nicht-Betriebszustand. In diesem Nicht-Betriebszustand ist die linke und rechte Gurtfalle 17, 18 jeweils nicht an der linken bzw. rechten Gurtlasche 15, 16 befestigt (vgl. Fig. 1), so dass das Fangschutzelement 10 beispielsweise in einem vorderen Bereich des Sitzelements 2 verstaut werden kann. In der in der Figur 5 gezeigten Variante kann das Fangschutzelement 10 hierfür im Bereich seines zweiten Endabschnitts 12 wenigstens eine Befestigungslasche 24 aufweisen, mittels welcher das Fangschutzelement 10 in dem Nicht-Betriebszustand an wenigstens einem an dem Fahrzeug-Innenraumboden 25 bereitgestellten Befestigungsbügel 26 befestigbar ist. Alternativ kann dieser Befestigungsbügel 26 auch, wie in der Figur 5 gezeigt, in einem vorderen Bereich des Sitzelements 2 vorgesehen sein. Es ist klar, dass in einer Variante auch der Befestigungsbügel 26 an dem Fangschutzelement 10 und die dazu komplementäre Befestigungslasche 24 an dem Fahrzeug-Innenraumboden 25 bzw. an dem Sitzelement 2 vorgesehen sein können. In einer weiterbildenden Variante kann das Fangschutzelement 10 in dem Nicht-Betriebszustand als wenigstens eine Verstautasche zum Aufnehmen von Ablagegut 19 (vgl. Fig. 5) ausgebildet sein.

In einer weiterbildenden Variante kann im Bereich des zweiten Endabschnitts 12 eine elastische Leiste vorgesehen sein, welche in eine Querrichtung Q der Sitzbank 1 verläuft und für eine verstärkte mechanische Stabilität des Fangschutzelements 10 in dem Betriebszustand sorgen kann. Eine derartige elastische Leiste ist in der Figur 2 dargestellt und mit dem Bezugszeichen 27 bezeichnet.

Die Darstellung der Figur 6 zeigt eine Teilansicht der Figur 5, welche sowohl die elastische Leiste 27 als auch die im vorderen Bereich des Sitzelements 5 angebrachten Befestigungsbügel 26 sowie die im Bereich des vorderen Endabschnitts 12 des Fangschutzelements 10 angebrachten Befestigungslaschen 24 schematisch darstellt.

Für den Fall, dass das die Sitzbank 1 verwendende Kraftfahrzeug einen sogenannten Rohbau-Tunnel aufweist, welcher einen Kofferraum des Kraftfahrzeugs mit dem Fahrzeug-Innenraum 25 verbindet, um beispielsweise Skier oder ähnliche, insbesondere länglich ausgebildete Gegenstände in dem Kraftfahrzeug transportieren zu können, kann der Fangschutz 10 - wie in der mit Figur 7 gezeigten Variante - in einem bezüglich der Querrichtung Q mittleren Abschnitt 28 mittels zweier Reißverschlüsse 29, 30 teilweise auftrennbar ausgebildet sein, so dass in einem solchen, teilweise aufgetrennten Zustand (bei geöffneten Reißverschlüssen 29, 30) der mittlere Bereich 28 des Fangschutzelements 10 den Rohbau-Tunnel des Kraftfahrzeugs freigibt, wodurch, wie bereits erläutert, bspw. Skier oder ähnliches, durchgeführt werden können. Um den mittleren Bereich 28 des Fangschutzelements 10 in dem aufgetrennten Zustand sicher fixieren zu können, kann im mittleren Bereich 28 zusätzlich ein Knebelverschluss 31 vorgesehen sein, in welchen eine oder mehrere komplementäre Montageöffnungen 32 (in der Figur 7 sind exemplarisch drei solcher Montageöffnungen 32 gezeigt) eingehängt werden können. Die Montageöffnungen 32 können dabei optional mit Randverstärkungsringen verstärkt sein. In einer weiteren Variante kann daran gedacht sein, dass in Bereichen rechts und links des mittleren Bereichs 28 weitere zusätzliche Verstautaschen bereitgestellt sind.

Des Weiteren dient die Klappe 8 im mittleren Bereich 28 des Fangschutzelementes 10 im Nicht-Betriebszustand vorteilhaft dazu, dass bei geöffneter Klappe 28 das Fangschutzelement links und rechts des Fahrzeugtunnels jeweils als glatte Schlaufenbahn absenkbar ist.

## Patentansprüche

1. Sitzbank (1) für ein Kraftfahrzeug,
- mit einem Sitzelement (2), welches bezüglich einer Sitzrichtung (S) der Sitzbank (1) einen vorderen und einen hinteren Endabschnitt (3, 4) aufweist,
- mit einer Sitzlehne (5), welche einen oberen und einen unteren Endabschnitt (6, 7) aufweist und im Bereich ihres unteren Endabschnitts (7) an dem hinteren Endabschnitt (4) des Sitzelements (2) angebunden ist,
- mit einem bezüglich der Sitzrichtung (S) in einem linken und rechten Randbereich der Sitzbank angeordneten linken und rechten Sicherheitsgurt (8, 9),
- mit einem Fangschutzelement (10) mit einem ersten und einem zweiten Endabschnitt (11, 12), welches mit dem ersten Endabschnitt (11) im Bereich des vorderen Endabschnitts (3) des Sitzelements (2) an diesem oder an einem Fahrzeug-Innenraumboden (25) des Kraftfahrzeugs lösbar befestigbar ist und mit dem zweiten Endabschnitt (12) an dem linken und dem rechten Sicherheitsgurt (8, 9) lösbar befestigbar ist,
- wobei der linke und rechte Sicherheitsgurt (8, 9) einen linken und rechten Gurtstreifen (13, 14) mit einer entlang desselben verschiebbar angeordneten linken bzw. rechten Gurtlasche (15, 16) aufweist,
- wobei im Bereich des zweiten Endabschnitts (12) des Fangschutzelements (10) jeweils eine zu der linken und rechten Gurtlasche (15, 16) komplementäre linke bzw. rechte Gurtfalle (17, 18) angeordnet ist, an welcher die linke und rechte Gurtlasche (15, 16) jeweils lösbar befestigbar ist,
- wobei das Fangschutzelement (10) in einem Betriebszustand, in welchem die linke und rechte Gurtfalle (17, 18) jeweils an der linken bzw. rechten Gurtlasche (15, 16) des linken bzw. rechten Sicherheitsgurts (8, 9) befestigt sind, mit einem vorderen Fangschutz-Abschnitt (20) wenigstens teilweise an einer Vorderseite (21) des Sitzelements (2) anliegt,
- wobei das Fangschutzelement (10) im Betriebszustand mit einem integral mit dem vorderen Fangschutz-Abschnitt (20) verbundenen hinteren Fangschutz-Abschnitt (22) einen in Sitzrichtung (S) wirkenden Fangschutz, insbesondere für auf dem Sitzelement (2) abgelegtes Ablagegut (19), ausbildet,
**dadurch gekennzeichnet, dass**
- der hintere Fangschutz-Abschnitt (22) in dem Betriebszustand mit einer durch eine Oberseite des Sitzelements (2) definierten Sitzebene (E) einen einstellbaren Fangschutz-Anstellwinkel (α) ausbildet, und dass
- der Fangschutz-Anstellwinkel (α) durch Bewegen der linken und/oder rechten Gurtlasche (15, 16) entlang des linken bzw. rechten Gurtstreifens (13, 14) einstellbar ist, und
- der linke und/oder rechte Sicherheitsgurt (8, 9) ein jeweils entlang des linken bzw. rechten Gurtstreifens (13, 14) verschiebbares Fixierungselement (23) aufweist, mittels welchem die linke bzw. rechte Gurtlasche (15, 16) zum Fixieren des Fangschutzelementes (10) in einem bestimmten Fangschutz-Anstellwinkel (α) in einer beliebigen Position entlang des linken bzw. rechten Gurtstreifens (13, 14) fixierbar ist.

2. Sitzbank (1) nach Anspruch 1,
**dadurch gekennzeichnet, dass**
das Fangschutzelement (10) in der Art einer Fangschutz-Plane und/oder eines Fangschutz-Netzes ausgebildet ist.

3. Sitzbank nach Anspruch 1 oder 2,
**dadurch gekennzeichnet, dass**
das Fangschutzelement (10) in einem mitteren Bereich (28) eine betätigbare Klappe aufweist.

4. Sitzbank nach Anspruch 3,
**dadurch gekennzeichnet, dass**
die Klappe durch wenigstens einen Reißverschluss (29, 30) betätigbar ist.

5. Kraftfahrzeug,
- mit einem Fahrzeug-Innenraumboden (25),
- mit einer auf dem Fahrzeug-Innenraumboden (25) angeordneten Sitzbank (1) nach einem der vorhergehenden Ansprüche.

## Claims

1. Bench seat (1) for a motor vehicle, having
- a seat element (2) which has, with respect to a seat direction (S) of the bench seat (1), a front and a rear end portion (3, 4),
- a seat back (5) which has an upper and a lower end portion (6, 7) and is attached in the region of its lower end portion (7) to the rear end portion (4) of the seat element (2),
- a left and a right seatbelt (8, 9) arranged, with respect to the seat direction (S), in a left and a right edge region of the bench seat,
- a load securing protection device (10) having a first and a second end portion (11, 12), which with the first end portion (11) can be releasably fastened in the region of the front end portion (3) of the seat element (2) to this or to a vehicle interior floor (25) of the motor vehicle, and with the second end portion (12) can be releasably fastened to the left and the right seatbelt (8, 9),
- wherein the left and the right seatbelt (8, 9) have a left and a right belt strip (13, 14) with a left and a right belt clip (15, 16) respectively arranged so as to be movable along the belt strip (13, 14),
- wherein in the region of the second end portion (12) of the load securing protection device (10) a left and a right belt latch (17, 18) that correspond to the respective left and right clip (15, 16) are arranged, to which the left and the right belt clip (15, 16) can be releasably fastened,
- wherein the load securing protection device (10), in an operating state in which the left and the right belt latches (17, 18) are respectively fastened to the left and the right belt clip (15, 16) of the left and the right seatbelt (8, 9), lies with a front load securing protection portion (20) at least in part against a front side (21) of the seat element (2),
- wherein the load securing protection device (10) in the operating state forms, with a rear load securing protection portion (22) integrally connected to the front load securing protection portion (20), a load securing protection acting in the seat direction (S), in particular for filling material (19) placed on the seat element (2), **characterised in that**
- the rear load securing protection portion (22) in the operating state forms, with respect to a seat plane (E) defined by an upper side of the seat element (2), an adjustable load securing protection work angle (α), and
- the load securing protection work angle (α) can be adjusted by moving the left and / or right belt clip (15, 16) along the left or right belt strip (13, 14), and
- the left and / or right seatbelt (8, 9) has a fixing element (23) that can be moved respectively along the left and right belt strip (13, 14), by means of which the left and the right belt clip (15, 16) can be fixed in a desired position along the left or right belt strip (13, 14) to fix the load securing protection device (10) at a certain load securing protection work angle (α).

2. Bench seat (1) according to claim 1,
**characterised in that**
the load securing protection device (10) is formed in the manner of a load securing protection cover and / or a load securing protection net.

3. Bench seat (1) according to claim 1 or 2,
**characterised in that**
the load securing protection device (10) has a hatch that can be activated in a central region (28).

4. Bench seat according to claim 3,
**characterised in that**
the hatch can be activated by at least one zip fastener (29, 30).

5. Motor vehicle, having
- a vehicle interior floor (25),
- a bench seat (1) according to one of the preceding claims arranged on the vehicle interior floor (25).

## Revendications

1. Banquette (1) de véhicule automobile,
- comprenant un élément de siège (2) qui présente par rapport à une direction de siège (S) de la banquette (1) de siège, une partie d'extrémité avant et une partie d'extrémité arrière (3, 4),
- comprenant un accoudoir (5) qui présente une partie d'extrémité supérieure et inférieure (6, 7) et est relié dans la zone de sa partie d'extrémité inférieure (7) à la partie d'extrémité arrière (4) de l'élément de siège (2),
- comprenant une ceinture de sécurité droite et gauche (8, 9) disposée par rapport à la direction de siège (S) dans une zone de bord gauche et droite de la banquette de siège,
- comprenant un élément de protection d'accrochage (10) doté d'une première et une seconde partie d'extrémité (11, 12), qui est fixée amovible dans la zone de la première partie d'extrémité avant (3) de l'élément de siège (2) à celui-ci ou à un plancher d'habitacle (25) du véhicule automobile et qui est fixée amovible à la seconde partie d'extrémité (12) sur la première et la seconde ceinture de sécurité (8,9),
- la ceinture de sécurité gauche et droite (8, 9) présente une bande de ceinture gauche et droite (13, 14), une bride gauche ou droite (15, 16) étant disposée en coulissement le long de celle-ci,
- dans la zone de la seconde partie d'extrémité (12) de l'élément de protection d'accrochage (10) respectivement étant disposé un rétracteur gauche ou droit (17, 18) complémentaire à la boucle de ceinture droite ou gauche (15, 16), dans lequel vient se fixer amovible respectivement la boucle de ceinture gauche et droite (15, 16),
- l'élément de protection d'accrochage (10) dans un état de fonctionnement, dans lequel les rétracteurs (17, 18) gauche et droit sont fixés respectivement à la boucle de ceinture (15, 16) de la ceinture de sécurité gauche ou droite (8, 9), avec une partie de protection d'accrochage avant (20), repose au moins partiellement sur une face avant (21) de l'élément de siège (2),
- l'élément de protection d'accrochage (10) dans l'état de fonctionnement avec une partie de protection d'accrochage arrière (22) reliée d'un seul tenant à la partie de protection d'accrochage avant (20) formant une protection d'accrochage agissant dans la direction de siège (S), en particulier pour l'élément fixe (19) déposé sur l'élément de siège (2), **caractérisée en ce que**
- la partie de protection d'accrochage arrière (22) dans l'état de fonctionnement forme avec un plan (E) de siège délimité par une face supérieure de l'élément de siège (2) un angle d'incidence réglable (a) de protection d'accrochage, et **en ce que**
- l'angle d'incidence (α) de protection d'accrochage peut être réglé par le mouvement de la boucle de ceinture gauche et/ou droite (15, 16) le long de la bande de ceinture gauche ou droite (13, 14), et
- la ceinture de sécurité gauche et/ou droite (8, 9) présente un élément de fixation (23) pouvant coulisser respectivement le long de la bande de ceinture gauche ou droite (13, 14), au moyen duquel la boucle de ceinture gauche ou droite (15, 16) pour fixer l'élément de protection d'accrochage (10) peut être fixée selon un angle d'incidence de protection d'accrochage défini (α) dans une position quelconque le long de la bande de ceinture gauche et droite (13, 14).

2. Banquette (1) selon la revendication 1, **caractérisée en ce que** l'élément de protection d'accrochage (10) est conçu à la manière d'un plan de protection d'accrochage et/ou d'un filet de protection d'accrochage.

3. Banquette selon la revendication 1 ou la revendication 2, **caractérisée en ce que** l'élément de protection d'accrochage (10) présente dans une zone médiane (28) un clapet pouvant être actionné.

4. Banquette selon la revendication 2, **caractérisée en ce que** le clapet peut être actionné au moins par une fermeture à glissière (29, 30).

5. Véhicule automobile,
- comprenant un plancher (25) d'habitacle de véhicule,
- comprenant une banquette (1) disposée sur le plancher (25) d'habitacle de véhicule selon l'une quelconque des revendications précédentes.
